# EUROPÄISCHE PATENTANMELDUNG

(11) **EP 1 646 154 A2**
(43) Veröffentlichungstag der Anmeldung: **12.04.2006**
(21) Anmeldenummer: 05090282.4
(22) Anmeldetag: 10.10.2005
(51) Int. Cl.: H04B 1/38

(54) **Aufnahmevorrichtung für ein mobiles Gerät**

(30) Priorität: 08.10.2004 DE 102004049755
(71) Anmelder: Funkwerk Dabendorf GmbH, 15806 Dabendorf (DE)
(72) Erfinder: August, Thomas, 10717 Berlin (DE); Braha, Arwed-Christian, 15831 Mahlow (DE)
(74) Vertreter: Schubert, Klemens

(57) **Zusammenfassung**

Die Erfindung betrifft eine Aufnahmevorrichtung für ein mobiles Gerät. Aufgabe ist es, eine Aufnahmevorrichtung zu schaffen, welche ergonomisch günstig gestaltet und dabei auch unter Kostengesichtspunkten flexibel an die sich ständig ändernde Formgestaltung mobiler Geräte anpassbar ist.

Die vorgeschlagene Aufnahmevorrichtung besteht aus einer Unterschale, die hinsichtlich ihrer Außenkontur an die Innenkontur einer sie aufnehmenden Aufnahmebox angepasst ist, einer oberhalb der Unterschale angeordneten Auflagefläche für das mobile Gerät und Mitteln zu dessen lösbarer Fixierung. Die Auflagefläche ist von einer die Unterschale verschließenden und mit einer Abdeckmatte aus Leder, Kunstleder, einem textilen oder textilähnlichen Belag bedeckten Trägerplatte gebildet. An ihr ist das mobile Gerät lediglich in einem Kopf- und einem Fußbereich fixiert, ansonsten aber, abgesehen von der auf der Trägerplatte mit der Abdeckmatte aufliegenden Unterseite, im Wesentlichen freiliegend gehalten, wobei es von der Vorrichtung oder deren Teilen weder umfasst oder eingefasst noch teilweise abgedeckt wird.

## Beschreibung

Die Erfindung betrifft eine Aufnahmevorrichtung für ein mobiles Gerät, vorzugsweise für ein telekommunikatives Endgerät, welche zur Festlegung des Gerätes, wie eines Mobiltelefons, eines Smartphones, eines PDA oder dergleichen, ausgebildet ist. Insbesondere dient sie der Festlegung entsprechender Geräte in einem Kraftfahrzeug.

Zur Festlegung von Mobiltelefonen in Kraftfahrzeugen ist es bekannt, eine sowohl an die Geometrie des jeweiligen Handys als auch an die Gegebenheiten im Kraftfahrzeug angepasste Aufnahmevorrichtung zu verwenden. Entsprechende Aufnahmevorrichtungen dienen dabei entweder ausschließlich der vorübergehenden Fixierung von Geräten oder aber, insbesondere im Hinblick auf die Ausbildung zur Aufnahme von Mobiltelefonen, meistens auch zur elektrischen bzw. elektronischen Verbindung der von ihnen aufgenommenen Geräte mit anderen, in der Regel fest im Fahrzeug eingebauten Geräten, wie beispielsweise Freisprecheinrichtungen.
Vorzugsweise für den Bereich der Mittelkonsole sind Halterungen bekannt geworden, welche in eine fest mit dem Fahrzeug verbundene Aufnahmebox bzw. Aufnahmemulde eingeschnappt werden. Die aus einer Unterschale und einer Oberschale bestehenden Halterungen sind so ausgebildet, dass ihre Außenkontur der Innenkontur der im Fahrzeug vorgesehenen Aufnahmebox folgt und dass die Innenkontur der Oberschale an den Seitenflächen des Mobiltelefons anliegt oder diese teilweise umschließt. An einem der axialen Enden sind Steckverbinder zur Kontaktierung und Verbindung des Mobiltelefons mit einer Ladeeinrichtung und/oder einer Freisprecheinrichtung vorgesehen, während das Handy an dem anderen axialen Ende der Aufnahmeschale mit dieser, zumeist rastend bzw. klammernd, in Eingriff gebracht wird. Ober- und Unterschalen entsprechender Aufnahmevorrichtungen werden im Allgemeinen als Spritzgussteile aus Kunststoff ausgeführt.

Dabei macht es sich erforderlich, nicht nur die Unterschale an die jeweilige Geometrie der Aufnahmebox des Fahrzeugs anzupassen, sondern für jeden Handytyp eine an das Mobiltelefon geometrisch angepasste Oberschale vorzusehen. Bei der Vielzahl der in ihrer Formgebung häufig sehr stark von einander abweichenden Handytypen ergibt sich der Nachteil, dass die Entwicklung und Fertigung an neue Handytypen angepasster Oberschalen verhältnismäßig kostenintensiv ist. Dies ist insbesondere durch die Kosten für die zur Herstellung der Oberschalen benötigten Spritzwerkzeuge bzw. Spritzgussformen bedingt. Zur Erreichung einer unter ergonomischen Gesichtspunkten angenehmen Oberflächenstruktur für die Oberschalen gelangen zudem bei der Herstellung der in der beschriebenen Weise ausgebildeten Handyhalterungen häufig besonders teure erodierte Metallwerkzeuge zum Einsatz. Deren durch das Erodieren erhaltene Oberfläche wird auf den eingespritzten Kunststoff und damit auf die Oberfläche der späteren Oberschale der Handyhalterung abformt, wodurch diese eine als angenehm empfundene und optisch ansprechende Oberflächenstruktur erhalten. Jedoch treibt dies die Kosten im Hinblick auf die für unterschiedliche Handytypen bereitzustellende Vielzahl verschiedener Oberschalen und die damit verbundene Herstellung ständig neuer Spritzgussformen zusätzlich in die Höhe.

Aufgabe der vorliegenden Erfindung ist es daher, eine Aufnahmevorrichtung für ein mobiles Gerät zur Verfügung zu stellen, welche einerseits von einem Benutzer als ergonomisch günstig bzw. angenehm empfunden wird und andererseits flexibel an die sich ständig ändernde Formgestaltung mobiler Geräte bei gleichzeitig niedrigen Fertigungskosten anpassbar ist. Vorzugsweise soll durch die Erfindung eine entsprechende Aufnahmevorrichtung für mobile Telekommunikationsendgeräte, wie Mobiltelefone, Smartphones und dergleichen bereitgestellt werden.

Die Erfindung wird durch eine Aufnahmevorrichtung mit den Merkmalen des Hauptanspruchs gelöst. Vorteilhafte Aus- bzw. Weiterbildungen der Erfindung sind durch die Unteransprüche gegeben.

Die zur Lösung der Aufgabe vorgeschlagene Aufnahmevorrichtung für ein mobiles Gerät ist zur Einfügung in eine ortsfest angeordnete Aufnahmebox bzw. Aufnahmemulde und zur temporären Festlegung des Geräts an der Aufnahmebox ausgebildet. Sie besteht, in an sich bekannter Weise, aus einer hinsichtlich ihrer Außenkontur an die Innenkontur der Aufnahmebox angepassten Unterschale, einer oberhalb dieser angeordneten Auflagefläche für das mobile Gerät und Mitteln zur lösbaren Fixierung des Geräts an der Auflagefläche. Gemäß der Erfindung ist die Auflagefläche von einer die Unterschale verschließenden und mit einer Abdeckmatte aus Leder, Kunstleder, einem textilen Gewebe oder einem textilähnlichen Belag bedeckten Trägerplatte gebildet. An dieser, weitestgehend plan ausgebildeten Trägerplatte ist das mobile Gerät lediglich in einem Kopf- und einem Fußbereich fixiert, ansonsten aber, abgesehen von der auf der Trägerplatte mit der Abdeckmatte aufliegenden Unterseite, im Wesentlichen freiliegend gehalten. Im "Wesentlichen freiliegend" meint in diesem Zusammenhang, dass das von der Vorrichtung aufgenommene Gerät in einem Bereich, zwischen seinem Kopf- und seinem Fußbereich, nicht von Teilen der Vorrichtung, wie etwa einer Oberschale oder dergleichen, umfasst, eingefasst oder gar teilweise abgedeckt wird. Gegebenenfalls, jedoch im Grunde entbehrlich, sind in diesem Bereich allenfalls vereinzelt von der Trägerplatte oder der Unterschale aufragende, seitlich angeordnete Stifte vorgesehen, welche eine Art Führung ausbilden. Jedenfalls wird aber auf eine, unter den einführend erläuterten Gesichtspunkten aufwendige Oberschale verzichtet. Zur Anpassung an neue Geräteformen sind daher gegebenenfalls Form und Anordnung der, hinsichtlich ihrer Gestaltung später noch näher zu erläuternden Mittel zur temporären Lagefixierung des Gerätes zu verändern, wobei dies, was ebenfalls noch zu erläutern sein wird, eventuell noch mit einer Änderung der Trägerplatte einhergeht. Insbesondere letzteres ist jedoch gegenüber einer Änderung der Oberschale bisher bekannter Aufnahmevorrichtungen deutlich kostengünstiger zu bewerkstelligen. Dies gilt umso mehr, als an ein die Trägerplatte ausbildendes Kunststoffteil keine besonderen Oberflächenanforderungen zu stellen sind, wobei durch die Belegung der Trägerplatte mit der textilen Abdeckmatte dennoch eine ergonomisch angenehme Oberfläche erhalten wird, welcher durch die Wahl eines entsprechenden, in einfacher Weise zuzuschneidenden Belags auch eine edel anmutende Optik verliehen werden kann.
Vorzugsweise ist die erfindungsgemäße Aufnahmevorrichtung nicht nur zum passiven Halten eines Gerätes ausgebildet sondern dient, insbesondere auch im Hinblick auf den Einsatz in Kraftfahrzeugen, darüber hinaus der Verbindung des Gerätes mit anderen elektrischen bzw. elektronischen Komponenten. Demgemäß sind an der Vorrichtung bei einer praxisrelevanten Ausführungsform Mittel zur elektrischen Kontaktierung des mobilen Geräts vorgesehen. In Weiterbildung bzw. sinnvoller weiterer Ausgestaltung dieser Ausbildungsform sind außerdem, zur Kopplung des in der Aufnahmevorrichtung festgelegten Gerätes mit entsprechenden anderen Geräten, in der Unterschale mit den Kontaktierungsmitteln verbundene elektronische Schaltungseinheiten zur Signalverarbeitung und/oder für eine Signalanpassung angeordnet.
Bei einer bevorzugten Ausführungsform der erfindungsgemäßen Aufnahmevorrichtung erfolgt die Fixierung des Geräts in einem der genannten Bereiche, also in dessen Kopf- oder Fußbereich, mittels eines in der Unterschale angelenkten, die Trägerplatte mit der Abdeckmatte durchragenden Halte- und Auswerfelements. Dabei weist dieses Element zur Fixierung des Gerätes eine Rastklammer oder eine, mit einer am Gehäuse des Gerätes ausgebildeten Ausnehmung bzw. Rasttasche in Eingriff zu bringende Rastnase auf. In dem anderen, bei dieser Ausbildungsform dem Halte- und Auswerfelement gegenüberliegenden Bereich seiner Fixierung liegt das Gerät an von der Trägerplatte aufragenden, an die Kontur des Gerätes angepassten Formelementen an und wird mit diesen gemeinsam von einer mit der Unterschale verbundenen Kappe umfasst und abgedeckt bzw., bezogen auf das Gerät, teilweise abgedeckt. Gegebenenfalls wird ein in die Vorrichtung eingefügtes Gerät dabei von den genannten Formelementen zusätzlich in einer Art Klemmsitz gehalten.

Wie bereits dargestellt, ist die erfindungsgemäße Gestaltung der Aufnahmevorrichtung vorzugsweise auf deren Verwendung zur Festlegung eines mobilen Telekommunikationsgerätes ausgerichtet. Demgemäß ist bei einer Ausbildungsform für Mobilfunkgeräte bzw. Handys oder Smartphones in der erwähnten, das Gerät auf einer Seite teilweise umfassenden Kappe ein Steckverbinder für eine Datenschnittstelle des Telekommunikationsgerätes und/oder zu seiner Verbindung mit einem Ladegerät angeordnet, welcher an der Trägerplatte oder der Unterschale befestigt ist. Weiterhin wird bei dieser Ausbildungsform die Trägerplatte von einem in der Unterschale befestigten HF-Steckkontakt zur Verbindung des Telekommunikationsgerätes mit einer externen Antenne durchragt.
Das schon erwähnte Halte- und Auswerfelement ist gemäß einer vorteilhaften Ausbildung der Vorrichtung so gestaltet, dass durch seine Betätigung und Bewegung in Richtung eines von der Vorrichtung aufgenommenen Gerätes das entsprechende Gerät mechanisch freigeben und von einem gegebenenfalls an der Vorrichtung vorhandenen HF-Stecker elektrisch getrennt wird.
Die als Auflagefläche fungierende, von der Abdeckmatte bedeckte Trägerplatte der Vorrichtung ist mit der Unterschale vorzugsweise lösbar verrastet bzw. in diese eingeschnappt. Im Falle einer Umrüstung einer bestehenden, beispielsweise in die Aufnahmebox eines Fahrzeugs eingebrachten Vorrichtung ist, im günstigsten Fall, abgesehen von eventuellen elektronischen Modifikationen bzw. Anpassungen, lediglich ein einfach zu bewerkstelligender Austausch der Trägerplatte vorzunehmen. Durch deren Belegung mit der vorzugsweise aufgeklebten Abdeckmatte sind dabei an die Oberflächeneigenschaften der Trägerplatte nur geringe Anforderungen zu stellen. Zur Anpassung an einen anderen bzw. neuen Gerätetyp sind dabei aus konstruktiver Sicht im Zuge der Fertigung einer entsprechenden Trägerplatte gegebenenfalls lediglich die Durchbrüche für ein die Platte durchragendes Halte- und Auswerfelement und/oder durch die Platte geführte Kontaktierungsmittel neu anzuordnen. Entsprechend einer möglichen Ausbildungsform der Erfindung ist außerdem in der Trägerplatte zwischen dem Kopf- und dem Fußbereich eines aufliegenden Gerätes eine Mulde vorgesehen. Diese bildet entweder eine Entnahmehilfe zur Erleichterung der Entnahme des Gerätes aus der Vorrichtung und/oder dient beispielsweise dem Schutz eines in die Mulde hineinragenden Objektivs einer gegebenenfalls in das Gerät integrierten Kamera.

Gemäß einer besonders bevorzugten Ausbildungsform handelt es sich bei der Abdeckmatte um ein auf die Trägerplatte aufgeklebtes Stück Filz. Die Verwendung eines Filzes verleiht der Vorrichtung eine edle Optik und erzeugt eine, beim Einlegen und Entnehmen eines Gerätes, als besonders angenehm und warm empfundene Auflagefläche. Zudem fügt sich die Filzoptik im Allgemeinen harmonisch in das Ambiente einer gegebenenfalls aufwendiger ausgestalteten Fahrgastzelle eines Kraftfahrzeugs ein. Dabei werden die ansprechende Optik und die ergonomisch angenehme Gestaltung bei gleichzeitiger Einsparung von Kosten gegenüber einer Herstellung der Vorrichtung unter Verwendung von Werkzeugen mit korrodierter Struktur erreicht.

Die Erfindung soll nachfolgend anhand eines Ausführungsbeispiels nochmals näher erläutert werden. In den zugehörigen Zeichnungen zeigen
- Fig. 1:: Eine mögliche Ausbildungsform der erfindungsgemäßen Aufnahmevorrichtung in einer räumlichen Darstellung
- Fig. 2:: Eine Explosivdarstellung der Ausbildungsform gemäß Figur 1 mit dem aufzunehmenden Gerät

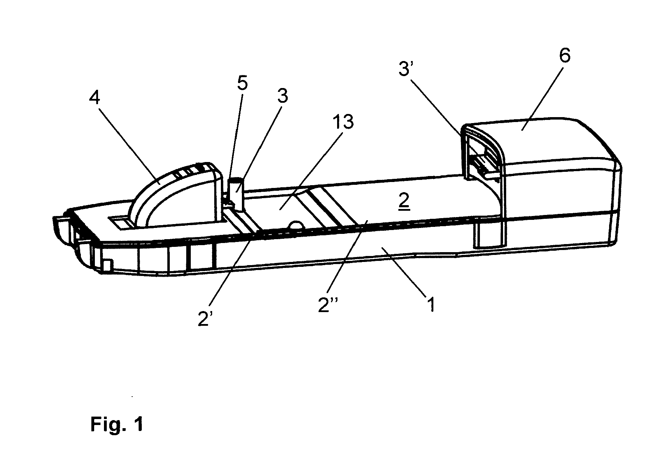

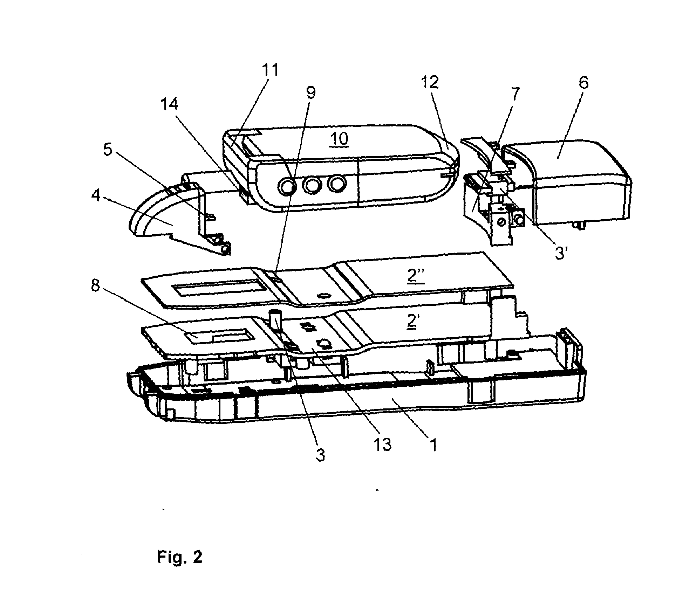

In der Fig. 1 ist eine mögliche Ausbildungsform der erfindungsgemäßen Aufnahmevorrichtung in einer räumlichen Darstellung wiedergegeben. Das dargestellte Beispiel bezieht sich auf eine Aufnahmevorrichtung für ein Mobiltelefon 10 (siehe Fig. 2) zu dessen Festlegung in einem Kraftfahrzeug, ohne dass die Erfindung auf diesen Anwendungsfall beschränkt wäre. Bei dem vorliegenden Beispiel handelt es sich nicht um eine lediglich passive Halterung, sondern um eine Aufnahmevorrichtung zum Laden des Mobilfunkgerätes 10 und vorzugsweise zu dessen Verbindung mit einer Freisprecheinrichtung, so dass die Vorrichtung über entsprechende Kontaktierungsmittel 3, 3' verfügt.
Die Aufnahmevorrichtung besteht aus einer Unterschale 1, welche in ihrer Außenkontur an die Innenkontur einer fest mit dem Fahrzeug verbundenen (hier nicht dargestellten) Aufnahmebox angepasst und durch eine die Auflagefläche 2 für das Mobiltelefon 10 bildende Trägerplatte 2' verschlossen ist. Die Trägerplatte 2' ist durch eine, beispielsweise aus einem Gewebe oder Filz bestehende Abdeckmatte 2" (siehe dazu insbesondere Fig. 2) abgedeckt und wird von einem HF-Steckkontakt 3, zur Verbindung des in die Vorrichtung eingelegten Mobiltelefons 10 mit einer externen, am Fahrzeug angeordneten Antenne, und durch ein Halte- und Auswerfelement 4 mit einer Rastnase 5 durchragt. Sie ist im Wesentlichen plan ausgebildet, kann aber wie in der Fig. 2 beispielhaft gezeigt auch eine Mulde 13 aufweisen, welche das Entnehmen des Gerätes 10 aus der Vorrichtung erleichtert oder in welche das Objektiv einer in das Gerät 10 integrierten Kamera hineinragt. Bei der Abdeckmatte 2" (siehe Fig. 2) handelt es sich vorzugsweise um ein entsprechend zugeschnittenes und mit der Trägerplatte 2' verklebtes Stück Filz. Denkbar sind aber auch Leder, Kunstleder oder eine beflockte Folie bzw. eine sonstige textilähnliche Auflage. Es wird unmittelbar erkennbar, dass die in dieser Weise ausgebildete Vorrichtung sehr kostengünstig zu fertigen ist. Da die Unterschale 1 in eine im Fahrzeug vorgesehene (nicht gezeigte) Aufnahmebox eingerastet wird, sind an ihre, für den Nutzer nicht sichtbare und durch ihn nicht ertastbare Oberfläche keine besonderen Anforderungen zu stellen. Gleiches gilt für die Trägerplatte 2', da diese durch die vorzugsweise aus Filz bestehende Abdeckmatte 2" bedeckt ist. Dabei vermittelt gerade Filz eine edle Optik und wird bei der Berührung als ergonomisch angenehm empfunden. Die in ihrem Aufbau und hinsichtlich ihrer Oberfläche einfach gehaltene Trägerplatte 2' kann durch entsprechende Platzierung der erforderlichen Durchbrüche 8, 9, insbesondere der Durchbrüche für den HF-Steckkontakt 3 und das Halte- und Auswerfelement 4, sehr leicht an unterschiedliche Formgestaltungen durch die Vorrichtung aufzunehmender Geräte 10 angepasst werden. An dem Halte- und Auswerfelement 4 ist eine Schnappnase 5 angeordnet, welche in einer entsprechenden im Kopfbereich 11 des Gerätes 10 ausgebildeten Ausnehmung bzw. Rasttasche 14 auf der äußeren Handykontur einrastet. Durch leichtes Drücken des Halte- und Auswerfelementes 4 in Richtung des eingerasteten Handys 10 wird die Rastnase aus der Ausnehmung 14 des Handys 10 gedrückt, das Handy 10 somit freigegeben und gleichzeitig ein Mechanismus betätigt, durch welchen die Verbindung mit dem HF-Steckkontakt 3 für die Antenne elektrisch getrennt wird, wobei das Mobiltelefon außerdem mechanisch von der Vorrichtung als solches und dem an ihr ausgebildeten HF-Steckkontakt gelöst wird. Das einzige mit einer Erodierstruktur zu versehende Teil der Vorrichtung ist die schalenförmige Kappe 6, welche das Handy im Fußbereich 12 umfasst bzw. teilweise abdeckt und einen mit diesem zu verbindenden Steckverbinder umgibt. Wie aus der Fig. 2 ersichtlich, welche die erfindungsgemäße Vorrichtung in einer Explosivdarstellung zeigt; ist es aber bei einer veränderten Handygeometrie im Allgemeinen nicht einmal erforderlich, die genannte Kappe 6 zu verändern, da die Anpassung an die Handygeometrie durch entsprechende in der Kappe angeordnete Formelemente 7 erfolgt.
Die Fig. 2 vermittelt einen sehr deutlichen Eindruck von der einfachen Gestaltung der Vorrichtung. Insbesondere wird gut erkennbar, dass die Anpassung an unterschiedliche Handygeometrien im Allgemeinen lediglich über eine Veränderung der Trägerplatte 2' und der mit ihr zu verklebenden Abdeckmatte 2" sowie der durch die Kappe 6 im Fußbereich 12 abgedeckten und mit der Trägerplatte 2' bzw. der Unterschale 1 verbundenen Formelemente 7 vorzunehmen ist. Durch eine entsprechende Anordnung der Durchbrüche 8, 9 in der Trägerplatte 2' und der Abdeckmatte 2" können das Halte- und Auswerfelement 4 sowie der HF-Steckkontakt 3 entsprechend den durch den jeweiligen Handytyp vorgegebenen Erfordernissen platziert werden.

Liste der verwendeten Bezugszeichen
- 1: Unterschale
- 2: Auflagefläche
- 2': Trägerplatte
- 2": Abdeckmatte aus textilem Gewebe
- 3: Kontaktierungsmittel, HF-Steckkontakt
- 3': Kontaktierungsmittel
- 4: Halte und Auswerfelement
- 5: Rastnase
- 6: Kappe
- 7: Formelement
- 8, 9: Durchbruch
- 10: Gerät
- 11: Kopfseite
- 12: Fußseite
- 13: Mulde
- 14: Ausnehmung bzw. Rasttasche

## Patentansprüche

1. Aufnahmevorrichtung für ein mobiles Gerät (10), zur Einfügung in eine ortsfest angeordnete Aufnahmebox oder -mulde und temporären Festlegung des Geräts (10) an der Aufnahmebox, mit einer hinsichtlich ihrer Außenkontur an die Innenkontur der Aufnahmebox angepassten Unterschale (1), einer oberhalb dieser angeordneten Auflagefläche (2) für das mobile Gerät (10) und Mitteln zur lösbaren Fixierung des Geräts (10) an der Auflagefläche (2), **dadurch gekennzeichnet, dass** die Auflagefläche (2) von einer die Unterschale (1) verschließenden und mit einer Abdeckmatte (2") aus Leder, Kunstleder, einem textilen Gewebe oder einem textilähnlichen Belag bedeckten Trägerplatte (2') gebildet ist, an welcher das mobile Gerät (10) lediglich in einem Kopfbereich (11) und einem Fußbereich (12) fixiert, ansonsten aber, abgesehen von der auf der Abdeckmatte (2") aufliegenden Unterseite, im Wesentlichen freiliegend gehalten ist.

2. Aufnahmevorrichtung nach Anspruch 1, **dadurch gekennzeichnet, dass** an dieser Mittel (3, 3') zur elektrischen Kontaktierung des mobilen Geräts (10) vorgesehen sind.

3. Aufnahmevorrichtung nach Anspruch 2, **dadurch gekennzeichnet, dass** in der Unterschale (1) mit den Kontaktierungsmitteln (3, 3') verbundene elektronische Schaltungseinheiten zur Signalverarbeitung und/oder für eine Signalanpassung, zur Kopplung des in der Aufnahmevorrichtung festgelegten Gerätes (10) mit anderen Geräten, angeordnet sind.

4. Aufnahmevorrichtung nach einem der Ansprüche 1 bis 3, **dadurch gekennzeichnet, dass** die Fixierung eines in die Vorrichtung eingelegten Geräts (10) in einem der genannten Bereiche (11, 12) mittels eines in der Unterschale (1) angelenkten, die Trägerplatte (2') mit der Abdeckmatte (2") durchragenden Halte- und Auswerfelements (4) erfolgt, welches zum Festlegen des Geräts (10) eine Rastklammer oder eine mit einer am Gehäuse des Geräts (10) ausgebildeten Ausnehmung (14) in Eingriff zu bringende Rastnase (5) aufweist, während das Gerät (10) in dem anderen, dem Halte- und Auswerfelement (4) gegenüberliegenden Bereich (12) an von der Trägerplatte aufragenden, an die Kontur des Gerätes (10) angepassten Formelementen (7) anliegt und mit diesen gemeinsam von einer mit der Unterschale (1) verbundenen Kappe (6) umfasst und abgedeckt wird.

5. Aufnahmevorrichtung für ein mobiles Telekommunikationsgerät (10) nach Anspruch 4, **dadurch gekennzeichnet, dass** in der Kappe (6) ein von dieser zumindest teilweise abgedeckter, an der Trägerplatte oder der Unterschale (1) befestigter Steckverbinder für eine Datenschnittstelle des Telekommunikationsgerätes (10) und/oder zur Verbindung des Geräts (10) mit einem Ladegerät angeordnet ist und die Trägerplatte (2') von einem in der Unterschale (1) befestigten HF-Steckkontakt (3) zur Verbindung des Telekommunikationsgerätes (10) mit einer externen Antenne durchragt wird.

6. Aufnahmevorrichtung nach Anspruch 4 oder 5, **dadurch gekennzeichnet, dass** durch eine Betätigung und Bewegung des Halte- und Auswerfelementes (4) in Richtung eines von der Vorrichtung aufgenommenen Gerätes (10) das Gerät (10) mechanisch freigeben und von einem gegebenenfalls an der Vorrichtung vorhandenen HF-Steckkontakt (3) elektrisch getrennt und gelöst wird.

7. Aufnahmevorrichtung nach einem der Ansprüche 1 bis 6, **dadurch gekennzeichnet, dass** die mit Durchbrüchen (8, 9) für das Halte- und Auswerfelement (4) und gegebenenfalls vorhandene Kontaktierungsmittel (3) versehene Trägerplatte (2') mit der Unterschale (1) verrastet ist.

8. Aufnahmevorrichtung nach Anspruch 1 oder 7, **dadurch gekennzeichnet, dass** in der Trägerplatte (2') zwischen dem Kopf- und dem Fußbereich eines aufliegenden Gerätes (10) eine Mulde (13) vorgesehen ist, welche eine Entnahmehilfe zur Erleichterung der Entnahme des Gerätes (10) aus der Vorrichtung ausbildet und/oder in welche das Objektiv einer gegebenenfalls in das Gerät (10) integrierten Kamera hineinragt.

9. Aufnahmevorrichtung nach einem der Ansprüche 1 bis 8, **dadurch gekennzeichnet, dass** es sich bei der Abdeckmatte um ein auf die Trägerplatte aufgeklebtes Stück Filz handelt.
